# EUROPEAN PATENT SPECIFICATION

(11) **EP 2 596 226 B1**
(45) Date of publication and mention of the grant of the patent: **27.11.2013**
(21) Application number: 11754488.2
(22) Date of filing: 21.07.2011
(51) Int. Cl.: F02M 25/038, F01B 21/02, F02D 17/02, F02B 47/02, F02G 5/02

(54) **A SYSTEM FOR PARTIALISING AN INTERNAL-COMBUSTION ENGINE**
SYSTEM ZUR PARTIALISIERUNG EINES VERBRENNUNGSMOTORS
SYSTÈME POUR PARTIALISER UN MOTEUR À COMBUSTION INTERNE

(30) Priority: 23.07.2010 IT BO20100469
(43) Date of publication of application: 29.05.2013
(73) Proprietor: Brum S.r.l., 20121 Milano (IT)
(72) Inventor: CIACCINI, Marco, I-06019 Umbertide (Perugia) (IT)
(74) Representative: Dall'Olio, Christian
(86) International application number: PCT/IB2011/053247
(87) International publication number: WO 2012/011067

(56) References cited:
- WO-A1-97/16634
- GB-A- 2 060 064
- GB-A- 2 418 228
- US-A- 2 791 881

## Description

### FIELD OF THE INVENTION

The invention relates to the technical sector of internal combustion engines, with particular reference to those installed on road-going vehicles.

In urban circulation or the frequent conditions of intense traffic, engines are used with small loads or rotation regimes comprised between the minimum, when the vehicle is not moving, to an intermediate regime which is relatively low, when the car is moving.

In these conditions of use, therefore only a small part of the maximum power a car can provide is required.

### DESCRIPTION OF THE PRIOR ART

As is known to technical experts in the sector, in the above working conditions, engines, especially those having controlled spark ignition, do not provide good performance in terms of consumption, as the composition of the air-petrol mixture must stay close to the stechiometric ratio in order to enable catalytic converter systems located in the exhaust to act effectively.

In conditions where the vehicle is stationary and the engine is ticking over, conditions of greatest waste obtain, with negative effects on pollution when many vehicles are concentrated in a same place.

To limit the effects as described above, some models of vehicles recently put on the mark incorporate a device which automatically switches off the engine where a halting of the vehicle lasts beyond a certain time, and re-starts the motor when the driver performs a predefined manoeuvre, for example pressing the clutch.

The described device, however, inevitably causes a greater workload for the starter motor and the battery, and these components have to be of a reinforced type with respect to the normal types.

Turning off the engine causes a collateral effect which might be unwanted, especially in summer in a traffic jam, where the shutting down of the air conditioner plane might ensue, with a considerable negative effect on comfort conditions in the car.

For large-cylinder multifractional engines, systems have been researched for some time now which cut down the number of cylinders functioning in conditions in which a small amount of power is required, such as the conditions described above, see e.g. GB 2 418 228 A.

These systems, applied on vehicles in the high-cost range, have up to today not enjoyed great success with a clientele who do not have fuel-saving among its main priorities, although the new ecological norms are bringing these research areas once more to the forefront.

### SUMMARY OF THE INVENTION

The aim of the present invention is therefore to provide a system for partialising an internal combustion engine conformed such as to be applicable also on small-cylinder engines, starting from a bi-cylindrical fractioning.

A further aim of the invention is to provide a partialising system able to reduce an engine's consumption and polluting emissions, in the zone comprised between the minimum revolution regime and an intermediate regime, without prejudicing regular engine ticking-over.

A still further aim of the invention consists in disclosing a system which can be applied both to engines having controlled ignition and engines having spontaneous ignition, and can function without interfering with modern devices present on the engines, in order to optimise consumption and emissions.

The above aims are attained by a partialising system for an internal combustion engine, the engine being at least bi-cylindrical in which at least a cylinder permanently functions with a combustion cycle, the system being associated to at least one of the remaining cylinders, and comprising:
first intercept organs associated to an aspiration manifold of the at least a cylinder of the remaining cylinders which becomes bivalent, which first intercept organs are mobile between an open position and a closed position thereof, in which entry of air from an outside environment is respectively enabled or prevented during an aspirating run performed by the piston of the bivalent cylinder;
second intercept organs, associated to the fuel injection plant of the engine, which second intercept organs are mobile between an open position and a closed position thereof, in which entry of fuel into the injector supplying the bivalent cylinder is respectively enabled or prevented during the stage of aspiration of the corresponding piston;
a steam production plant;
at least a device for steam injection internally of a combustion chamber of the bivalent cylinder activated, consequently of an activation of the system, in phase relation with an end of the compression run of the piston of the bivalent cylinder and with the first and second intercept organs maintained in the respective closed positions thereof;
electronic organs for management and control of the system, destined to interface with the electronic control unit governing functioning of the internal combustion engine, in order to automatically activate the system in low-load engine use conditions and with a revolutions regime thereof comprised between a minimum and a predetermined intermediate level, as well as to exclude the system and restore normal combustion functioning in all the cylinders beyond the intermediate revolutions regime up to maximum revolutions.

The above system, thanks to the steam functioning which at least one cylinder is converted to, can be applied also on small-cylinder engines starting from a bi-cylindrical fractioning.

For larger fractioning, the converted steam cylinders can be more than one in number; in this case the activation and deactivation of the system, thanks to the electronic control, can be synchronized for all the cylinders involved, or can be differentiated, according to what is considered time by time optimal according to the conditions of use of the engine.

The steam cycle enables maintaining a regular turning of the engine, not very different to what can be obtained when all the cylinders function with the normal combustion cycle.

Thanks to this characteristic, the ticking-over regime can stay more or less the same without any onset of undesired vibrations.

The cylinders which function using steam do not consume fuel, lead to a reduction in consumption and polluting emissions of the engine in the zone comprised between the ticking-over regime and the intermediate regime of the engine, without any loss in fluidity of motion and without the driver's noticing perceptible drops in performance.

The proposed system provides best results if applied to engines having controlled spark ignition (petrol or gas), but can be advantageously applied also to engines having spontaneous ignition (diesel).

The electronic organs for management and control of the system are predisposed to dialogue and interact with the modern electronic devices which control the functioning of the engine, such as not to interfere negatively with the parameters of consumption and emissions which they enable them to reach when the system is deactivated.

### BRIEF DESCRIPTION OF THE DRAWINGS

The characteristics of the invention will be made evident from the following description of preferred embodiments of the system of the invention, in accordance with what is set out in the claims and with the aid of the accompanying figures of the drawings, in which:

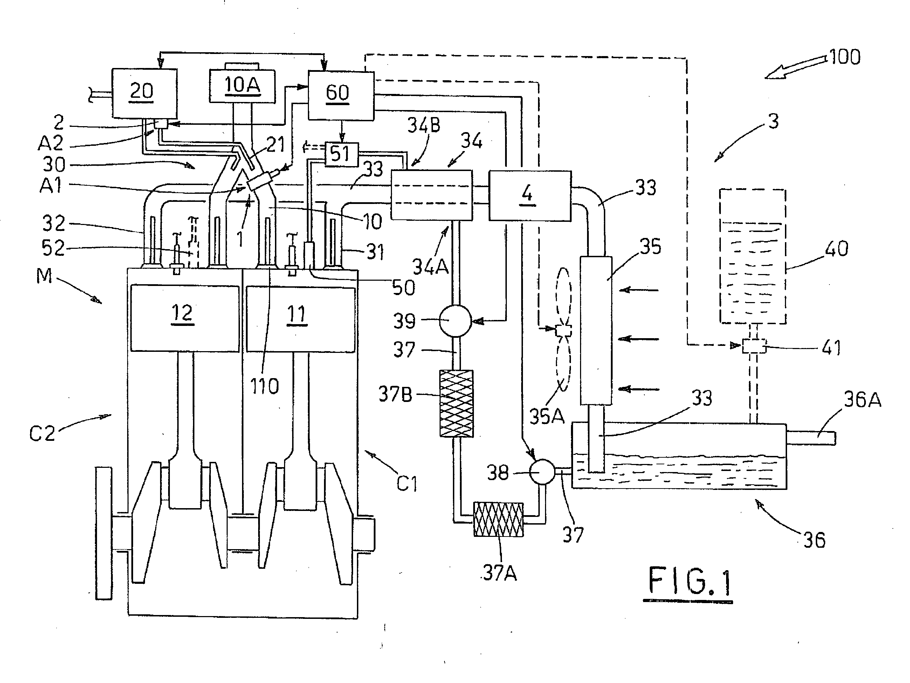

- figure 1 is a schematic view of an engine to which the system of the invention is applied;
- figures from 2 to 5 illustrate functioning steps of the engine of figure 1, with the system activated.

### DESCRIPTION OF PREFERRED EMBODIMENTS OF THE INVENTION

With reference to the figures of the drawings, 100 denotes in its entirety the partialising system of the invention.

The partialising system 100 is applied to an internal combustion engine M which is at least bi-cylindrical, preferably with controlled ignition, such as in the example illustrated in the figures, functioning with petrol or gas according to the Otto four-stroke cycle.

The engine M can also be two-stroke, still with controlled ignition, or can be a spontaneous-ignition Diesel cycle engine.

The engine M defines the engine of a vehicle which is not illustrated.

In the example of a bi-cylindrical engine M illustrated in the figures, the system 100 is associated to one of the cylinders, which becomes bivalent and is indicated with C1, while the other, denoted by C2, will function permanently with the original combustion cycle.

The system 100 comprises first intercept organs 1, associated to an aspiration manifold 10 of the bivalent cylinder C1, which organs 1 are mobile between an open position A1 and a closed position X1, in which either the inflow of air from outside is either allowed or disallowed via an air filter 10A, during the aspiration run performed by the piston 11 of the bivalent cylinder C1.

The first intercept organs 1, not illustrated in detail as of known type, are constituted for example by a butterfly valve or a slide valve or the like, activated by an electromechanical actuator, and are situated upstream of the aspirating valve 110 controlled by the cam shaft (not illustrated) of the engine M.

Further provided in the system are second intercept organs 2, associated to the fuel injection plane (schematically illustrated and denoted by 20) of the engine M, mobile between an open position A2 and a closed position X2, in which the inflow of fuel to the injector 21 is either allowed or prevented during the aspirating step of the corresponding piston 11.

The system comprises a plant for production of steam 3 which, in a preferred embodiment, comprises:
a heat exchanger 34, located immediately downstream of the discharge manifold 30 which unites the discharge conduits 31, 32 exiting respectively from the cylinders C1, C2, into a single discharge pipe (33), the heat exchanger 34 being designed to exploit residual heat of the exhaust gases in order to obtain evaporation of water circulating internally thereof in a serpentine extending between an inlet 34A and an outlet 34B;
a radiator 35, located downstream of the heat exchanger 34, destined to facilitate condensation of the water steam expelled from the bivalent cylinder C1 and mingled in the exhaust gases produced by the combustion of the remaining cylinders C2;
a silencer 36, partially filled with water, into which the discharge pipe enters 33, the discharge pipe 33 being conformed such that an outlet mouth thereof is located below the water surface level in the silencer 36;
an exhaust tailpipe 36A, associated to the silencer 36 and located above the water level, designed to enable outlet of the exhaust gases into the external environment;
a channel 37 for removing the water contained in the silencer 36 by means of a first pump 38;
at least a first filter 37A, associated to the channel 37 downstream of the first pump 38;
a high-pressure second pump 39 arranged downstream of the at least a first filter 37A and designed to send water removed from the silencer 36 to the inlet 34A of the heat exchanger 34.

The steam production plant 3 can comprise a tank 40 (denoted with a broken line) containing water, provided for replenishing the level of water in the silencer 36, by opening a relative tap 41 when required.

The steam produced by the plant 3 is sent to at least a device 50 for steam injection internally of the internal combustion chamber of the bivalent cylinder C1, commanded by an electronically-controlled solenoid valve 51.

The system 100 further comprises electronic organs 60 for managing and controlling the above-cited components in a predetermined automatic program of activation and deactivation of the system 100, as described herein below.

In carrying out the program, the electronic organs 60 are destined to interface with the various electronic boards governing the functioning of the internal combustion engine, among which the board located in the injection plant 20.

The partialising system 100 will enter into action when the engine M, having reached the normal working temperature, is functioning at low load level, with a revolution regime comprised between the minimum and a predetermined intermediate level, for example 2500 rpm in the described case of an Otto cycle engine.

The bivalent cylinder C1 is then converted to steam functioning, for which:
- the first and the second intercept organs 1, 2 are arranged in the respective closed positions X1, X2 thereof;
- the first and the second pump 38, 39 are activated for circulating water in the plant 3;
- the solenoid valve 51 that controls the steam injection device 50 is predisposed to function in phase relation with the distribution diagram of the bivalent cylinder C1.

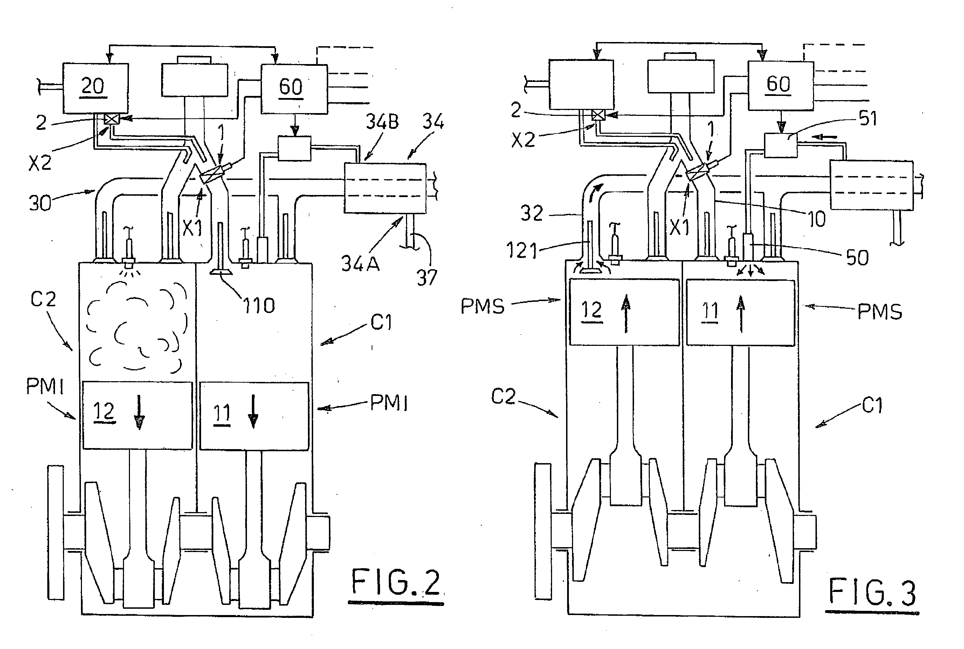

Figure 2 illustrates the expansion step of the combustion cylinder C2, followed by the explosion of the mixture, with the consequent descent towards bottom dead centre PMI of the relative piston 12.

With the architecture of the engine M illustrated for example in the figures, in which the crank shafts are aligned, there is a simultaneous descent of the bivalent cylinder C1 too, which performs its aspirating step with the relative valve 110 open; the inflow of air from outside is prevented by the first intercept organs 1, which are closed, so that a depression is created inside the cylinder C1.

Figure 3 illustrates the discharge step of the combustion cylinder C2 by means of upwards rising towards the top dead centre PMS of the relative piston 12, with the respective discharge valve 121 open.

The rising of the piston 11 of the bivalent cylinder C1 usually corresponds to the compression step, but in this case the pressure prior to aspiration is restored, which is close to atmospheric pressure.

It is important to note how the increase in resistance to descent of the piston 11, which occurred in the aspirating step of the bivalent cylinder C1 without entry of air, is compensated for with an aid to rising, during the following step, given by the depression which is created.

In suitable phase relation with the reaching of top dead centre PMS by the piston 11, the solenoid valve 51 is activated to enable the injector device 50 to inject steam into the cylinder C1, with a consequent increase in pressure.

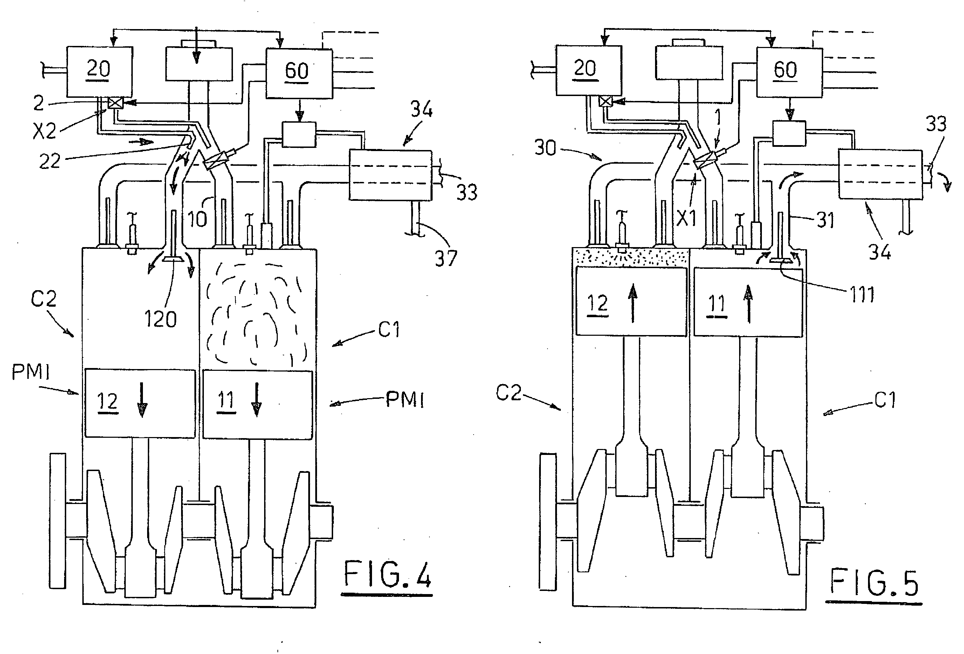

Figure 4 illustrates the aspirating step of the combustion cylinder C2, by descent of the relative piston 12 towards the bottom dead centre PMI, with the respective aspirating valve 120 open; in phase relation, in accordance with normal functioning, the fuel is injected through the relative injector 22.

The corresponding expansion step of the steam previously injected into the cylinder C1 causes a thrust on the head of the piston 11 which facilitates descent thereof towards bottom dead centre PMI.

Figure 5 illustrates the compression step of the combustion cylinder C2, by means of the raising of the relative piston 12 towards top dead centre PMS; in phase relation with reaching top dead centre, the sparking plug is supplied with an impulse to set off the spark and cause explosion of the mixture.

The corresponding raising of the piston 11 of the cylinder C1 realises the relative discharge step, with the relative valve 111 open.

The water steam injected into the corresponding discharge conduit 31 flows into the discharge pipe 33, together with the gases expelled from the cylinder C2, and crosses, in order, the heat exchanger 34, the catalyser 4 and then the radiator 35, where it is condensed.

The water obtained from the condensation is then collected in the silencer 36 and is newly collected from there by the pipes 38, 39, and once more transformed into steam, after appropriate purification performed by the filters 37a, 37b.

The discharge pipe 33, with the outlet below the water surface level, carries the exhaust gases injected into the silencer 36 to bubble in the mass of water collected therein before exiting into the atmosphere via the terminal 36A; this process facilitates depositing of many of the solid particles in suspension in the gas, such as carbon residues and others.

The partialising system 100 is automatically excluded, returning the bivalent cylinder C1 too to the normal combustion cycle, above the intermediate regime up to the maximum regime, or when suitable sensors, already present in the normal equipment, detect a firm pressure on the pedal of the accelerator, and communicate this request for greater power to the control boards.

The partialising system 100 described above can also be associated to an engine in which an apparatus for steam injection is present in all the cylinders, in combination and in phase relation with the injection of the fuel, according to what is described in Italian patent application for industrial invention no. PG2008A000035 deposited on 28/07/2008 in the name of the same Applicant.

In this case, and with reference to the bicylinder engine M considered herein above, a relative device 52 is present for injecting the steam into the combustion cylinder C2, denoted with a broken line in figure 1.

The above-cited apparatus, which can advantageously exploit the steam production plant 3 of the system 100 of the invention, functions synergically therewith, in variable modes according to the type of engine, vehicle and conditions of use.

The above is however understood to be by way of non-limiting example, and any variations in details with respect to what is described above are considered henceforth to fall within the scope of protection defined in the following claims.

## Claims

1. A system for partialising an internal-combustion engine, the engine being at least a two-cylinder engine in which at least a cylinder permanently functions with a combustion cycle, the system (100) being associated to at least a cylinder of the remaining cylinders (C1) and comprises:
first intercept organs (1) associated to an aspiration manifold (10) of the at least a cylinder of the remaining cylinders (C1) which becomes bivalent, which first intercept organs (1) are mobile between an open position (A1) and a closed position (X1) thereof, in which entry of air from an outside environment is respectively enabled or prevented during an aspirating run performed by the piston (11) of the bivalent cylinder (C1);
second intercept organs (2), associated to the fuel injection plant (20) of the engine (M), which second intercept organs (2) are mobile between an open position (A2) and a closed position (X2) thereof, in which entry of fuel into the injector (21) supplying the bivalent, cylinder (C1) is respectively enabled or
prevented during the stage of aspiration of the corresponding piston (11);
the system being **characterised in that** it comprises:
a steam production plant (3);
at least a device (50) for steam injection internally of a combustion chamber of the bivalent cylinder (C1) activated, consequently of an activation of the system (100), in phase relation with an end of the compression run of the piston (11) of the bivalent cylinder (C1) and with the first and second intercept organs (1, 2) maintained in the respective closed positions (X1, X2) thereof;
electronic organs (60) for management and control of the system (100),
destined to interface with the electronic control unit governing functioning of the internal combustion engine (M), in order to automatically activate the system (100) in low-load engine (M) use conditions and with a revolutions regime thereof comprised between a minimum and a predetermined intermediate level, as well as to exclude the system (100) and restore normal combustion functioning in all the cylinders beyond the intermediate revolutions regime up to maximum revolutions.

2. The partialising system of claim 1, **characterised in that** the steam production plant (3) comprises:
a heat exchanger (34), located immediately downstream of the discharge manifold (30) which unites the discharge conduits (31, 32) exiting respectively from the cylinders (C1, C2), into a single discharge pipe (33), the heat exchanger (34) being designed to exploit residual heat of the exhaust gases in order to obtain evaporation of water circulating internally thereof in a serpentine extending between an inlet (34A) and an outlet (34B);
a radiator (35), located downstream of the heat exchanger (34), destined to facilitate condensation of the water steam expelled from the bivalent cylinder (C1) and mingled in the exhaust gases produced by the combustion of the remaining cylinders (C2);
a silencer (36), partially filled with water, into which the discharge pipe enters (33), the discharge pipe (33) being conformed such that an outlet mouth thereof is located below the water surface level in the silencer (36);
an exhaust tailpipe (36A), associated to the silencer (36) and located above the water level, designed to enable outlet of the exhaust gases into the external environment;
a channel (37) for removing the water contained in the silencer (36) by means of a first pump (38);
at least a first filter (37A), associated to the channel (37) downstream of the first pump (38);
a high-pressure second pump (39) arranged downstream of the at least a first filter (37A) and designed to send water removed from the silencer (36) to the inlet (34A) of the heat exchanger (34).

3. The partialising system of claim 2, **characterised in that** the heat exchanger (34) is positioned upstream of a catalyser (4) associated to the discharge pipe (33) and designed to treat the exhaust gases conveyed in the discharge pipe (33).

4. The partialising system of claim 2, **characterised in that** the radiator (35) is positioned downstream of a catalyser (4) associated to the discharge pipe (33) and destined to treat the exhaust gases conveyed into the discharge pipe (33), the radiator (35) being arranged such as to be exposed to a running draught.

5. The partialising system of claim 2 or 3, **characterised in that** the radiator (35) is provided with a cooling electric fun (35A).

6. The partialising system of claim 2, **characterised in that** a second filter (37B) is located in series with the first filter (37A) and upstream of the second pump (39).

7. The partialising system of claim 2, **characterised in that** the steam production plant (3) comprises a tank (40) containing water and provided such as to replenish the water level in the silencer (36) by means of opening a relative tap (41).

8. The partialising system of claim 1 or 2, **characterised in that** the first intercept organs (1) are constituted by a valve activated by an electromechanical actuator.

9. The partialising system of claim 1 or 2, **characterised in that** the device (50) for injecting steam into the combustion chamber of the bivalent cylinder (C1) is commanded by an electronically-controlled solenoid valve (51).

## Patentansprüche

1. System zur Partialisierung eines Verbrennungsmotors, wobei der Motor mindestens ein Zwei-Zylinder-Motor ist, bei dem zumindest ein Zylinder ständig in einem Verbrennungszyklus arbeitet, wobei das System (100) mindestens einem Zylinder der restlichen Zylinder (C1) zugeordnet ist und Folgendes beinhaltet:
erste Absperrorgane (1), die einem Ansaugkrümmer (10) des zumindest einen Zylinders der restlichen Zylinder (C1), der somit bivalent wird,
zugeordnet sind, wobei diese ersten Absperrorgane (1) beweglich sind zwischen einer geöffneten Stellung (A1) und einer geschlossenen Stellung (X1), in denen das Eintreten von Luft aus einer Außenumgebung, während eines durch den Kolben (11) des bivalenten Zylinders (C1) ausgeführten Ansaughubs, jeweils ermöglicht beziehungsweise verhindert wird;
zweite Absperrorgane (2), die der Kraftstoffeinspritzanlage (20) des Motors (M) zugeordnet sind, wobei diese zweiten Absperrorgane (2) beweglich sind zwischen einer geöffneten Stellung (A2) und einer geschlossenen Stellung (X2), in denen das Eintreten von Kraftstoff in den Injektor (21) zur Versorgung des bivalenten Zylinders (C1) während der Ansaugphase des entsprechenden Kolbens (11) jeweils ermöglicht beziehungsweise verhindert wird;
wobei das System **dadurch gekennzeichnet ist, dass** es Folgendes beinhaltet:
eine Dampferzeugungsanlage (3);
zumindest eine Vorrichtung (50) zum Einspritzen von Dampf in eine Verbrennungskammer des bivalenten Zylinders (C1), die infolge der Aktivierung des Systems (100) in Phasenbeziehung zu einem Ende des Verdichtungshubes des Kolbens (11) des bivalenten Zylinders (C1) aktiviert wird, während die ersten und zweiten Absperrorgane (1, 2) in ihren jeweiligen geschlossenen Stellungen (X1, X2) gehalten werden;
elektronische Einrichtungen (60) zur Steuerung und Kontrolle des Systems (100), die als Schnittstelle zu der elektronischen Steuereinheit vorgesehen sind, welche den Betrieb des Verbrennungsmotors (M) steuert, um das System (100) automatisch zu aktivieren, wenn der Motor (M) unter Niedriglastbedingungen und in einem Drehzahlbereich zwischen einem minimalen und einem vorgegebenen mittleren Niveau arbeitet, und um das System (100) auszuschließen und den normalen Verbrennungsbetrieb in allen Zylindern wieder herzustellen, wenn die Drehzahl im Bereich zwischen dem mittleren Niveau und der Höchstdrehzahl liegt.

2. Partialisierungssystem nach Anspruch 1, **dadurch gekennzeichnet, dass** die Dampferzeugungsanlage (3) Folgendes beinhaltet:
einen Wärmeübertrager (34), der unmittelbar stromabwärts hinter dem Abgaskrümmer (30) angeordnet ist und der die Abgaskanäle (31, 32), die jeweils von den Zylindern (C1, C2) wegführen, zu einem einzigen Abgasrohr (33) vereint, wobei der Wärmeübertrager (34) dafür ausgelegt ist, die Restwärme der Abgase zu nutzen, um die Verdampfung des darin in einer Rohrschlange umlaufenden Wassers zu bewirken, die sich zwischen einem Einlass (34A) und einem Auslass (34B) erstreckt;
einen Kühler (35), der stromabwärts hinter dem Wärmeübertrager (34) angeordnet ist und dazu vorgesehen ist, die Kondensation des Wasserdampfes zu begünstigen, der aus dem bivalenten Zylinder (C1) ausgestoßen und mit den durch die Verbrennung in den restlichen Zylindern (C2) erzeugten Abgasen vermischt wurde;
einen Schalldämpfer (36), der teilweise mit Wasser gefüllt ist, in den das Abgasrohr (33) eintritt, wobei das Abgasrohr (33) so geformt ist, dass seine Austrittsöffnung unterhalb der Höhe des im Schalldämpfer (36) vorhandenen Wasserpegels liegt;
ein Auspuff-Endrohr (36A), das mit dem Schalldämpfer (36) verbunden und über dem Wasserpegel angeordnet ist, und dazu dient, den Auslass der Abgase in die Außenumgebung zu ermöglichen;
einen Kanal (37) zum Entfernen des im Schalldämpfer (36) enthaltenen Wassers mittels einer ersten Pumpe (38);
zumindest einen ersten Filter (37A), der stromabwärts nach der ersten Pumpe (38) mit dem Kanal (37) verbunden ist;
eine mit Hochdruck arbeitende zweite Pumpe (39), die stromabwärts nach dem zumindest einen ersten Filter (37A) angeordnet und dafür ausgelegt ist, das aus dem Schalldämpfer (36) entfernte Wasser zum Einlass (34A) des Wärmeübertragers (34) zu leiten.

3. Partialisierungssystem nach Anspruch 2, **dadurch gekennzeichnet, dass** der Wärmeübertrager (34) stromaufwärts vor einem Katalysator (4) angeordnet ist, der mit dem Abgasrohr (33) verbunden und dafür ausgelegt ist, die durch das Abgasrohr (33) geführten Abgase zu behandeln.

4. Partialisierungssystem nach Anspruch 2, **dadurch gekennzeichnet, dass** der Kühler (35) stromabwärts nach einem Katalysator (4) angeordnet ist, der mit dem Abgasrohr (33) verbunden und dafür ausgelegt ist, die durch das Abgasrohr (33) geführten Abgase zu behandeln, wobei der Kühler (35) so angeordnet ist, dass er dem Fahrtwind ausgesetzt ist.

5. Partialisierungssystem nach Anspruch 2 oder 3, **dadurch gekennzeichnet, dass** der Kühler (35) mit einem elektrischen Kühllüfter (35A) ausgestattet ist.

6. Partialisierungssystem nach Anspruch 2, **dadurch gekennzeichnet, dass** ein zweiter Filter (37B) in Reihe mit dem ersten Filter (37A) und stromaufwärts vor der zweiten Pumpe (39) angeordnet ist.

7. Partialisierungssystem nach Anspruch 2, **dadurch gekennzeichnet, dass** die Dampferzeugungsanlage (3) einen Tank (40) beinhaltet, der Wasser enthält und dafür vorgesehen ist, den Wasserpegel im Schalldämpfer (36) durch Öffnen eines entsprechenden Hahns (41) wieder aufzufüllen.

8. Partialisierungssystem nach Anspruch 1 oder 2, **dadurch gekennzeichnet, dass** die ersten Absperrorgane (1) aus einem Ventil bestehen, das durch einen elektromechanischen Stellantrieb betätigt wird.

9. Partialisierungssystem nach Anspruch 1 oder 2, **dadurch gekennzeichnet, dass** die Vorrichtung (50) zur Dampfeinspritzung in die Verbrennungskammer des bivalenten Zylinders (C1) durch ein elektronisch gesteuertes Magnetventil (51) angesteuert wird.

## Revendications

1. Un système pour partialiser un moteur à combustion interne, le moteur étant au moins un moteur à deux cylindres dans lequel au moins un cylindre fonctionne en permanence avec un cycle de combustion, le système (100) étant associé à au moins un cylindre des cylindres restants (C1) et comprenant:
des premiers organes d'interception (1) associés à un collecteur d'aspiration (10) dudit au moins un cylindre des cylindres restants (C1) qui devient bivalent, lesdits premiers organes d'interception (1) sont mobiles entre une position ouverte (A1) et une position fermée (X1), dans lesquelles l'afflux d'air provenant d'un environnement extérieur est respectivement permis ou inhibé pendant une course d'aspiration effectuée par le piston (11) du cylindre bivalent (C1) ;
des deuxièmes organes d'interception (2), associés au système d'injection de carburant (20) du moteur (M), lesdits deuxièmes organes d'interception (2) sont mobiles entre une position ouverte (A2) et une position fermée (X2), dans lesquelles l'afflux de carburant dans l'injecteur (21) alimentant le cylindre bivalent (C1) est respectivement permis ou inhibé pendant la phase d'aspiration du piston (11) correspondant ;
le système étant **caractérisé en ce qu'**il comprend:
un système pour la production de vapeur (3);
au moins un dispositif (50) pour l'injection de vapeur à l'intérieur d'une chambre de combustion du cylindre bivalent (C1) actionné, conséquemment à une activation du système (100), en relation de phase avec la fin de la course de compression du piston (11) du cylindre bivalent (C1) et avec les premiers et deuxièmes organes d'interception (1, 2) maintenus dans leurs positions fermées (X1, X2) respectives ;
des organes électroniques (60) pour la gestion et le contrôle du système (100), destinés à s'interfacer avec l'unité de commande électronique pilotant le fonctionnement du moteur à combustion interne (M), de manière à activer automatiquement le système (100) dans des conditions d'utilisation à basse charge du moteur (M) et avec un régime de tours de celui-ci compris entre un niveau minimum et un niveau intermédiaire prédéfini, et de manière à exclure le système (100) et à rétablir le fonctionnement normal de combustion dans tous les cylindres au-delà du régime de tours intermédiaire jusqu'au régime maximum.

2. Le système de partialisation selon la revendication 1, **caractérisé en ce que** le système pour la production de vapeur (3) comprend:
un échangeur de chaleur (34), situé juste en aval du collecteur d'échappement (30) qui réunit les conduits d'échappement (31, 32) sortant respectivement des cylindres (C1, C2) en un unique tube d'échappement (33), l'échangeur de chaleur (34) étant destiné à exploiter la chaleur résiduelle des gaz d'échappement de manière à obtenir l'évaporation de l'eau circulant à l'intérieur de celui-ci dans une serpentine s'étendant entre une entrée (34A) et une sortie (34B) ;
un radiateur (35), situé en aval de l'échangeur de chaleur (34), destiné à faciliter la condensation de la vapeur d'eau expulsée du cylindre bivalent (C1) et mélangée aux gaz d'échappement produits par la combustion des cylindres restants (C2) ;
un silencieux (36), partiellement rempli d'eau, dans lequel le tube d'échappement (33) entre, ledit tube d'échappement (33) étant conformé de manière à ce qu'une bouche de sortie de celui-ci soit située au-dessous du niveau de la surface de l'eau dans le silencieux (36) ;
un tuyau d'échappement terminal (36A), associé au silencieux (36) et situé au-dessus du niveau de l'eau, destiné à permettre la sortie des gaz d'échappement dans l'environnement extérieur ;
un canal (37) pour évacuer l'eau contenue dans le silencieux (36) au moyen d'une première pompe (38) ;
au moins un premier filtre (37A), associé au canal (37) en aval de la première pompe (38) ;
une deuxième pompe haute pression (39) disposée en aval dudit au moins un premier filtre (37A) et destinée à envoyer l'eau évacuée du silencieux (36) à l'entrée (34A) de l'échangeur de chaleur (34).

3. Le système de partialisation selon la revendication 2, **caractérisé en ce que** l'échangeur de chaleur (34) est positionné en amont d'un catalyseur (4) associé au tube d'échappement (33) et destiné à traiter les gaz d'échappement véhiculés dans ledit tube d'échappement (33).

4. Le système de partialisation selon la revendication 2, **caractérisé en ce que** le radiateur (35) est positionné en aval d'un catalyseur (4) associé au tube d'échappement (33) et destiné à traiter les gaz d'échappement véhiculés dans ledit tube d'échappement (33), le radiateur (35) étant disposé de manière à être exposé à un flux d'air de course.

5. Le système de partialisation selon la revendication 2 ou 3, **caractérisé en ce que** le radiateur (35) est doté d'un ventilateur électrique de refroidissement (35A).

6. Le système de partialisation selon la revendication 2, **caractérisé en ce qu'**un deuxième filtre (37B) est situé en série avec le premier filtre (37A) et en amont de la deuxième pompe (39).

7. Le système de partialisation selon la revendication 2, **caractérisé en ce que** le système pour la production de vapeur (3) comprend un réservoir (40) contenant de l'eau et prévu pour rétablir le niveau d'eau dans le silencieux (36) par le biais de l'ouverture d'un bouchon (41) correspondant.

8. Le système de partialisation selon la revendication 1 ou 2, **caractérisé en ce que** les premiers organes d'interception (1) sont constitués d'une vanne activée par un actionneur électromécanique.

9. Le système de partialisation selon la revendication 1 ou 2, **caractérisé en ce que** le dispositif (50) pour l'injection de vapeur dans la chambre de combustion du cylindre bivalent (C1) est commandé par une électrovanne (51) à commande électronique.
